# EUROPÄISCHE PATENTSCHRIFT

(11) **EP 2 022 309 B1**
(45) Veröffentlichungstag und Bekanntmachung des Hinweises auf die Patenterteilung: **27.06.2012**
(21) Anmeldenummer: 08012565.1
(22) Anmeldetag: 11.07.2008
(51) Int. Cl.: A01C 7/08, A01C 7/10

(54) **Pneumatische Sämaschine**
Pneumatic sowing machine
Semoir pneumatique

(30) Priorität: 08.08.2007 DE 102007037469; 11.12.2007 DE 102007059593
(43) Veröffentlichungstag der Anmeldung: 11.02.2009
(73) Patentinhaber: Amazonen-Werke H. Dreyer GmbH & Co. KG, 49205 Hasbergen (DE)
(72) Erfinder: Wilken, Martin, 26409 Wittmund (DE); Brüggemann, Klaus, 27777 Ganderkesee (DE)

(56) Entgegenhaltungen:
- US-A- 4 705 220
- US-A- 4 834 004
- US-A- 5 878 679

## Beschreibung

Die Erfindung betrifft eine pneumatische Sämaschine gemäß des Oberbegriffes des Patentanspruches 1

Eine derartige Sämaschine ist durch die US-A-49 34 004 bekannt.

Eine weitere pneumatische Sämaschine ist durch die EP 0 897 660 B2 bekannt. Diese Sämaschine weist einen Vorratsbehälter auf, an dessen unteren Ende sich ein Dosierorgan anschließt. Zwischen dem unteren trichterförmigen Ende des Vorratsbehälters und dem Dosierorgan ist ein als Drehschieber ausgebildeter Absperrschieber angeordnet. Dieser Absperrschieber baut relativ hoch.

Der Erfindung liegt die Aufgabe zugrunde, eine kompakt und ohne Höhenverlust bauende Dosiervorrichtung mit einer Absperrvorrichtung zu schaffen, wobei der Materialzufluss vom Vorratsbehälter zum Dosierorgan in einfacher Weise absperrbar ist und der Absperrschieber während des Ausbringvorganges in unverlierbarer Weise an der Maschine unterbringbar ist.

Diese Aufgabe wird erfindungsgemäß durch die kennzeichnenden Merkmale des Patentanspruches 1 gelöst. Infolge dieser Maßnahme kann das Dosierorgan unmittelbar an das untere Ende des trichterförmigen Vorratsbehälters angeordnet werden. Es entsteht also kein Bauverlust durch die Anordnung eines relativ hoch bauenden Drehschiebers zwischen dem unteren Ende des trichterförmigen Vorratsbehälters und dem Dosierorgan um dem Materialzufluss zu dem Dosierorgan abzusperren. Die Absperrung ist erforderlich, um beispielsweise einen Zellenradwechsel des Dosierorgans zu ermöglichen. Weiterhin ist es erforderlich, den unteren Bereich des Vorratsbehälters zum Dosierorgan abzusperren, um bei einer Arbeitsunterbrechung, wenn sich beispielsweise Raps, der sehr schnell keimt, oder Dünger, der quillt, sich im Vorratsbehälter und in den Zellen des Zellenrades des Dosierorgans befindet, das Zellenrad herausgenommen werden muss, um dieses sich noch in den Zellen des Zellenrades befindliche Material daraus zu entfernen, um so ein Keimen des Rapses und ein Aufquellen des Düngers in den Zellen des Zellenrades zu verhindern.

Weiterhin muss sichergestellt werden, dass nach Entfernen des Absperrschiebers der Gehäusespalt, durch den der Absperrschieber in das Gehäuse zum Absperren des Materialzuflusses vom Vorratsbehälter zum Dosierorgan eingeschoben wird, während des normalen Ausbringvorganges abgesperrt ist, damit keine Luft aus dem Drucksystem der Verteilmaschine über den Gehäusespalt entweichen kann. Dieses wird durch den Abdichtschieber, der in den Gehäusespalt eingeschoben wird, gewährleistet.

Die zu einem Bauteil zusammengefassten Absperrschieber und Abdichtschieber immer an der Maschine vorrätig. Wenn der Abdichtschieber während des Ausbringvorganges in dem Gehäusespalt angeordnet ist, wird der Absperrschieber in sicher befestigter Weise an der Sämaschine mitgeführt. Um den Abdichtschieber und den Absperrschieber als ein gemeinsames Bauteil ausbilden zu können, ist vorgesehen, dass der Abdichtschieber an dem Absperrschieber angeordnet ist. Um sowohl Absperrschieber wie auch Abdichtschieber, die zu einem gemeinsamen Bauteil zusammengefasst sind, in einfacher Weise jeweils durch den Gehäusespalt in das Gehäuse hineinschieben und wieder herausziehen zu können, ist vorgesehen, dass der Absperrschieber einen Handgriff aufweist, dass der Abdichtschieber in der Nähe des Handgriffes am Absperrschieber angeordnet ist. Hierdurch wird eine vorteilhafte Anordnung des Handgriffes an den Schieberelementen erreicht.

Eine vorteilhafte Zuordnung von Absperrschieber und Abdichtschieber ergibt sich dadurch, dass der Absperrschieber und der Abdichtschieber zumindest annähernden rechten Winkel zueinander angeordnet ein.

Weitere Einzelheiten der Erfindung sind der Beispielsbeschreibung und den Zeichnungen zu entnehmen. Hierbei zeigen
- Fig. 1: den Dosierer mit in Abdichtposition eingeschoben Abdichtschieber und in Parkposition befindlichen Absperrschieber in perspektivischer Darstellung,
- Fig. 2: den Dosierer mit ganz eingeschobenen Absperrschieber in perspektivischer Darstellung,
- Fig. 3: den kombinierten Absperr- und Abdichtschieber in perspektivischer Darstellung,
- Fig. 4: den kombinierten Absperr- und Abdichtschieber in einer anderen perspektivischen Darstellung und
- Fig. 5: den Dosierer ohne Abdicht- und Absperrverschieber in perspektivischer Darstellung.

Das als Dosierer bezeichnete Dosiergerät 101 ist unter dem trichterförmigen Auslauf eines nicht dargestellten Vorratsbehälters einer landwirtschaftlichen Verteilvorrichtung, beispielsweise einer pneumatischen Sämaschine zum dosierten Ausbringen von körnigem Material, wie Saatgut unterschiedlicher Größe und Art, chemischen Granulaten, angeordnet. Das Dosiergerät 101 weist das Gehäuse 102 mit den beiden seitlich des Gehäuses angeordneten Lagereinheiten 103 und 104 auf. In diesen Lagereinheiten 103 und 104 ist die Dosierwelle 105 drehbar gelagert. Die Dosierwelle 105 wird von einem nicht dargestellten Antrieb in einstellbarer Weise angetrieben. Auf der Dosierwelle 105 ist drehfest das als Zellenrad 106 ausgebildete Dosierorgan angeordnet. Das Zellenrad 106 speist in einstellbarer Weise das sich im Vorratsbehälter befindliche Material, wie Saatgut über eine unterhalb des Dosierorgans 106 angeordnete Schleuse in eine pneumatisch beaufschlagte Leitung ein. Der Vorratsbehälter ist druckdicht zu verschließen und mit einem Überdruck gegenüber dem Atmosphärendruck zu beaufschlagen, so dass der Dosierer 101 Bestandteil eines sog. Überdruckdosiersystems für pneumatische Verteileinrichtungen ist. Dies bedeutet, dass auch der Innenbereich des Gehäuses 102 sowohl zum Vorratsbehälter wie auch zur Rohrschleuse mit einem Überdruck gegenüber dem Atmosphärendruck beaufschlagt ist.

In dem Raum oberhalb und vor dem Zellenrad 6 ist auf der Seite zum Vorratsbehälter noch die rotierend angetriebene Rühreinrichtung 107 im Gehäuse 102 des Dosierers 101 angeordnet.

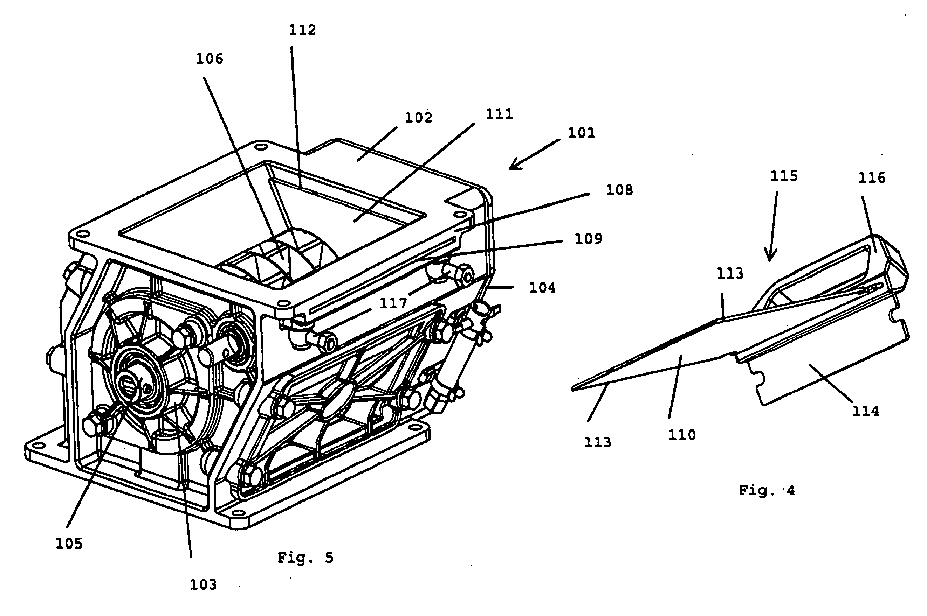

In der einen Wandung 108 des Gehäuses 102 ist ein Gehäusespalt 109, wie Fig. 5 zeigt, angeordnet, durch welches ein Absperrschieber 110 in das Gehäuse 102 zur Absperrung der Materialzufuhr vom Vorratsbehälter zum als Zellenrad 106 ausgebildeten Dosierorgan einschiebbar ist, wie Fig. 10 zeigt. In den Seitenwandungen 111 sind als Verlängerungen des Gehäusespaltes 109 schlitzförmige Führungen 112 angeordnet, in welchen die seitlichen Bereiche 113 des Absperrschiebers 110 fassen. Das Absperren der Materialzufuhr vom Vorratsbehälter zum als Zellenrad 106 ausgebildeten Dosierorgan ist erforderlich, wenn sich beispielsweise im Vorratsbehälter noch Material befindet und das Zellenrad 106 aus dem Gehäuse 102 heraus genommen werden muss. Dies kann zum Zwecke des Auswechselns des Zellenrades 106 gegen ein Zellenrad eines anderen Typs sein. Es ist auch möglich, dass zu Wartungs- oder Reinigungszwecken das Zellenrad 106 aus dem Gehäuse 102 bei zumindest noch teilweise gefülltem Vorratsbehälter die Herausnahme des Zellenrades 106 erforderlich ist. Somit muss dann nicht der Vorratsbehälter von dem sich noch im Vorratsbehälter befindlichen Material entleert werden. Auch ist ein Absperren des Gehäuses 102 aus gegenüber dem Vorratsbehälter durch den Absperrschieber 110 erforderlich, wenn sich beispielsweise Dünger im Vorratsbehälter befindet oder Saatgut, damit nicht von unten über den Dosierer 101 Feuchtigkeit an das Material, welches sich noch im Vorratsbehälter befindet, gelangen kann. Dies ist beispielsweise erforderlich, wenn der Ausbringvorgang über Nacht oder über längere Zeit unterbrochen werden muss.

Da der Dosierer 101 in einem sog. Drucksystem Einsatz findet, wie vor geschildert, muss nach Herausnahme des Absperrschiebers 110 aus dem Gehäuse 102 und aus dem Gehäusespalt 109 der Gehäusespalt 109 während des Ausbingvorganges wieder abgedichtet werden, weil ansonst über den Gehäusespalt 109, wenn sich kein Schieber in diesem befindet und diesen abdeckt, Luft entweichen kann und das Drucksystem kann nicht in ausreichender Weise aufrecht erhalten werden, da über den Gehäusespalt 109 Luft entweicht und der Luftdruck unter das erforderliche Druckniveau absinkt.

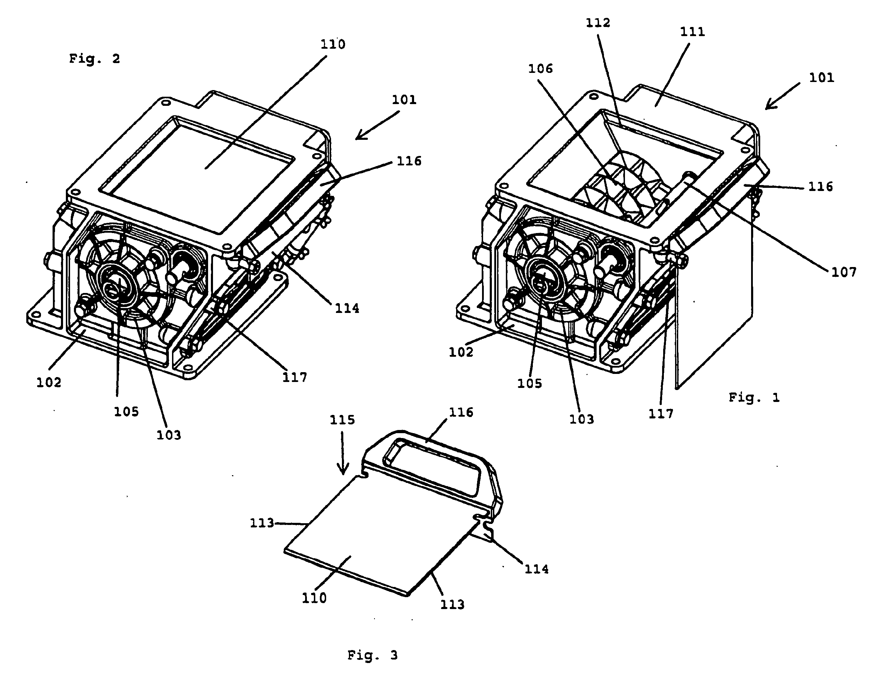

Um dieses zu verhindern wird der Gehäusespalt 109 durch einen sog. Abdichtschieber 114 gem. den Fig. 2 abgedichtet.

Der Absperrschieber 110 und der Abdichtschieber 114 sind zu einem gemeinsamen Bauteil zusammengefasst und bilden das Schieberelement 115. Hierdurch ist sichergestellt, dass im Abdichtschieber 114 und Absperrschieber 115 an der Sämaschine vorhanden sind.

Eine einfache Zusammenfassung von Abdichtschieber 114 und Absperrschieber 110 zu einem Bauteil 115 wird dadurch erreicht, dass man den Abdichtschieber 114 an dem Abscherschieber 110 anordnet. An dem Absperrschieber 110 ist der Handgriff 116 angeordnet. Der Abdichtschieber 114 ist in der Nähe des Handgriffes 116 am Absperrschieber 114 angeordnet, so dass mit einem Handgriff 116 in einfacher Weise wahlweise der Absperrschieber 110 oder der Abdichtschieber 114 durch den Gehäusespalt 109 in das Gehäuse 102 einzuschieben ist. Es hat sich herausgestellt, dass es vorteilhaft ist, wenn der Absperrschieber 110 und der Abdichtschieber 114 zumindest in einem annähernd rechten Winkel zueinander angeordnet sind.

Um den Gehäusespalt 109 abzudichten, wird der Abdichtschieber 114, dessen Schieberelement 115 in etwa eine Länge aufweist, der der Gehäusedicke im Bereich des Gehäusespaltes 109 entspricht, einfach in den Gehäusespalt 109 eingeschoben und dichtet diesen entsprechend ab. Um eine sichere Befestigung des Abdichtschiebers 114 in dem Gehäusespalt 109 zu erreichen, wird der Absperrschieber 114 über die schwenkbar angeordneten Schwenkschrauben 117 gegen das Gehäuse 102 gezogen. Hierdurch wird zusätzlich eine verbesserte Abdichtung des Gehäusespaltes 109 durch die Anlage des Absperrschiebers 113 gegen das Gehäuse 102 im Bereich des Gehäusespaltes 109 erreicht.

Sowohl an dem aus Abdichtschieber 114 und Absperrschieber 110 bestehenden Schieberelement 115 ist Griff 116 angebracht, um ein einfaches Herausziehen und Einsetzen des Abdichtschieber 114 und des Absperrschiebers 110 aus dem Dosiergehäuse 12 zu ermöglichen.

Selbstverständlich lässt sich auch das aus Absperrschieber 110 und Abdichtschieber 114 bestehende Schieberelement 115 bei einer Sämaschine einsetzen, bei dem der Vorratsbehälter nicht unter einem erhöhten Druck gesetzt ist.

## Patentansprüche

1. Pneumatische Sämaschine mit Vorratsbehälter, dem Vorratsbehälter zugeordneten und einem Gehäuse angeordneten Dosierorgan, welches das sich im Vorratsbehälter befindliche körnige Material in zumindest eine pneumatisch beaufschlagte Förderleitung einspeist und einer zwischen dem unteren Ende des trichterförmigen Vorratsbehälters und dem Dosierorgan angeordneten Absperrvorrichtung, wobei die Absperrvorrichtung als ein in das Gehäuse oberhalb des Dosierorgans einschiebbarer Absperrschieber ausgebildet ist, wobei eine Wand des Gehäuses einen Gehäusespalt aufweist, der durch eine den Gehäusespalt abdichtenden Abdichtschieber abdichtbar ist, **dadurch gekennzeichnet, dass** durch diesen Gehäusespalt (109) der Absperrschieber (110,115) nach Herausnahme des Abdichtschiebers (114) in das Gehäuse (102) zur Absperrung der Materialzufuhr vom Vorratsbehälter zum Dosierorgan einschiebbar ist, dass nach Entfernen des Absperrschiebers (110) in das Gehäuse (102) zum Verschließen des Gehäusespaltes, durch welches der Absperrschieber (110) in das Gehäuse (2) oberhalb des Dosierorgans (106) zur Absperrung des Materialzuflusses vom Vorratsbehälter zum Dosierorgan (106) einschiebbar ist, der Abdichtschieber (114) in den Gehäusespalt (109) einschiebbar ist, dass der Abdichtschieber (114) am Gehäuse oder im Gehäusespalt (109) in seiner Abdichtposition befestigbar ist, dass der Absperrschieber (114) und der Abdichtschieber (110) zu einem Bauteil (115) zusammengefasst sind.

2. Sämaschine nach Anspruch 1, **dadurch gekennzeichnet, dass** der Abdichtschieber (114) an dem Absperrschieber (115) angeordnet ist.

3. Sämaschine nach Anspruch 1, **dadurch gekennzeichnet, dass** der Absperrschieber (110) einen Handgriff (117) aufweist, dass der Abdichtschieber (114) in der Nähe des Handgriffes (117) am Absperrschieber (114) angeordnet ist.

4. Sämaschine nach einem oder mehreren der vorstehenden Ansprüche, **dadurch gekennzeichnet, dass** der Absperrschieber (110) und der Abdichtschieber (115) zumindest annähernden rechten Winkel zueinander angeordnet ein.

5. Sämaschine nach Anspruch 1, **dadurch gekennzeichnet, dass** die Sämaschine ein geschlossenes Drucksystem, bei dem der Vorratsbehälter unter einem höheren Druck als der atmosphärische Außendruck gesetzt ist, aufweist.

## Claims

1. Pneumatic sowing machine having a storage container, a metering member associated with the storage container and arranged in a housing, said metering member feeding the granular material located in the storage container into at least one pneumatic feed line, and a shutting off apparatus arranged between the lower end of the funnel-shaped storage container and the metering member, the shutting off apparatus being formed as a shutting off slide which can be inserted into the housing above the metering member, a wall of the housing comprising a housing gap which can be sealed by a sealing slide sealing the housing gap, **characterised in that** the shutting off slide (110, 115) can be inserted through this housing gap (109) and into the housing (102) to shut off the material feed from the storage container to the metering member once the sealing slide (114) has been taken out, **in that** the sealing slide (114) can be inserted into the housing gap (109) once the shutting off slide (110) has been removed from the housing (102) to free the housing gap through which the shutting off slide (110) can be inserted into the housing (2) above the metering member (106) to shut off the material influx from the storage container to the metering member (106), **in that** the sealing slide (114) can be fixed on the housing or in the housing gap (109) in its sealing position, and **in that** the shutting off slide (114) and the sealing slide (110) are combined to form a single component (115).

2. Sowing machine according to Claim 1, **characterised in that** the sealing slide (114) is arranged on the shutting off slide (115).

3. Sowing machine according to Claim 1, **characterised in that** the shutting off slide (110) has a grip (116), and **in that** the sealing slide (114) is arranged on the shutting off slide (114) in the vicinity of the grip (116).

4. Sowing machine according to one or more of the preceding claims, **characterised in that** the shutting off slide (110) and the sealing slide (115) are arranged at least approximately at right angles to one another.

5. Sowing machine according to Claim 1, **characterised in that** the sowing machine has a closed pressure system, in which the storage container is subject to a pressure higher than the external atmospheric pressure.

## Revendications

1. Semoir pneumatique comportant un réservoir d'alimentation auquel est associé un organe de dosage installé dans un boîtier et alimentant au moins une conduite de transfert pneumatique avec les produits en forme de grains du réservoir d'alimentation et un dispositif de coupure monté entre l'extrémité inférieure du réservoir d'alimentation en forme de trémie et l'organe de dosage,
* le dispositif de coupure étant réalisé sous la forme d'un tiroir de coupure qui se glisse dans le boîtier au-dessus de l'organe de dosage,
* une paroi du boîtier ayant une fente à travers laquelle se glisse un tiroir d'étanchéité assurant l'étanchéité de la fente du boîtier,
semoir pneumatique **caractérisé en ce que**
- le tiroir de coupure (110, 115) se glisse dans cette fente de boîtier (109) après extraction du tiroir d'étanchéité (114) dans le boîtier (102) pour couper l'alimentation en produit du réservoir d'alimentation à l'organe de dosage,
- le tiroir d'étanchéité (114) se glisse dans la fente (109) du boîtier après enlèvement du tiroir de coupure (110) dans le boîtier (102) pour fermer l'intervalle du boîtier à travers lequel le tiroir de coupure (110) se glisse dans le boîtier (102) au-dessus de l'organe de dosage (106) pour couper l'alimentation en produits à partir du réservoir d'alimentation vers l'organe de dosage (106),
- le tiroir d'étanchéité (114) se fixe en position d'étanchéité au boîtier ou dans la fente de boîtier (109),
- le tiroir de coupure (110) et le tiroir d'étanchéité (114) sont regroupés en un unique composant (115).

2. Semoir selon la revendication 1,
**caractérisé en ce que**
le tiroir d'étanchéité (114) est installé sur le tiroir de coupure (115).

3. Semoir selon la revendication 1,
**caractérisé en ce que**
le tiroir de coupure (110) comporte une poignée (117),
- le tiroir d'étanchéité (114) est prévu sur le tiroir de coupure (115) à proximité de la poignée (117).

4. Semoir selon l'une des revendications précédentes,
**caractérisé en ce que**
le tiroir de coupure (110) et le tiroir d'étanchéité (114) font au moins sensiblement un angle droit l'un par rapport à l'autre.

5. Semoir selon la revendication 1,
**caractérisé en ce que**
le semoir comporte un système sous pression, fermé, dont le réservoir d'alimentation est mis à une pression supérieure à la pression atmosphérique extérieure.
